# EUROPÄISCHE PATENTSCHRIFT

(11) **EP 2 632 765 B1**
(45) Veröffentlichungstag und Bekanntmachung des Hinweises auf die Patenterteilung: **17.09.2014**
(21) Anmeldenummer: 11770456.9
(22) Anmeldetag: 18.10.2011
(51) Int. Cl.: B60N 2/08

(54) **ARRETIEREINRICHTUNG EINER LÄNGSVERSTELLVORRICHTUNG EINES KRAFTFAHRZEUGSITZES MIT SPERRSTIFTEN**
LOCKING ARRANGEMENT OF A LONGITUDINAL ADJUSTMENT DEVICE OF A VEHICLE SEAT WITH LOCKING PINS
MÉCANISME DE VERROUILLAGE DU DISPOSITIF DE DÉPLACEMENT LONGITUDINAL D'UN SIÈGE DE VÉHICULE AVEC AVEC AVEC GOUPILLES DE BLOCAGE

(30) Priorität: 27.10.2010 DE 102010043025
(43) Veröffentlichungstag der Anmeldung: 04.09.2013
(73) Patentinhaber: Johnson Controls Metals and Mechanisms GmbH & Co. KG, 42699 Solingen (DE)
(72) Erfinder: BENEKER, Wilfried, 42799 Leichlingen (DE)
(74) Vertreter: Bauer, Wulf
(86) Internationale Anmeldenummer: PCT/EP2011/068146
(87) Internationale Veröffentlichungsnummer: WO 2012/055721

(56) Entgegenhaltungen:
- DE-A1- 10 242 825
- DE-A1- 19 709 149
- US-A- 5 913 947

## Beschreibung

Die Erfindung bezieht sich auf eine Arretiereinrichtung einer Längsverstellvorrichtung eines Kraftfahrzeugsitzes, mit a) einer Rastenleiste, die periodisch angeordnete Rastöffnungen und Raststege aufweist und einer Bodenschiene der Längsverstellvorrichtung zugeordnet ist sowie b) einer Sperreinheit, die einer Sitzschiene der Längsverstellvorrichtung zugeordnet ist und die mindestens zwei, unabhängig von einander in Rastöffnungen einrastbare und gemeinsam ausrastbare Sperrstifte aufweist, welche jeweils einen Frontbereich mit einem Frontende, einen sich an das Frontende anschließenden, mit den Raststegen zusammenwirkenden Verjüngungsbereich und einen sich an den Verjüngungsbereich anschließenden Schaftbereich mit einem oberen Ende aufweisen, wobei der Verjüngungsbereich sich im Profil gesehen von einem oberen Punkt B zu einem unteren Punkt A verjüngt, und die eine Stiftachse haben.

Eine derartige Arretiereinrichtung ist aus der DE 10242825 A1 vorbekannt. Zum Stand der Technik wird weiterhin auch auf die DE 197 09 149 A1 und die DE 27 29 770 C2 verwiesen. Derartige Arretiereinrichtungen werden auch als Mehrstiftarretiereinrichtungen bezeichnet. Sie ermöglichen eine sicheres Einrasten und eine feinstufige Längsverstellung. In blockierter Stellung sind zwei Sperrstifte in Anlage an jeweils einem ihnen benachbarten Raststeg. Die Sperrstifte sind mit ihrem Verjüngungsbereich in Anlage am Raststeg. Der Verjüngungsbereich ist als kegelstumpfförmiger Bereich ausgebildet, er befindet sich zwischen dem Frontbereich und dem Schaftbereich der Sperrstifte. Ein Sperrstift sperrt jeweils nur in einer Verschieberichtung. Die beiden Sperrstifte sperren in unterschiedlichen Verschieberichtungen. Der Winkel, mit dem der Verjüngungsbereich in Anlage am Raststeg ist, liegt im Bereich der Selbsthemmung.

Da im allgemeinen nur ein Sperrstift für die Arretierung einer Verschieberichtung verantwortlich, ist, wirken auf diesen einen Sperrstift und auf den entsprechenden Raststeg, an dem der Sperrstift anliegt, während einer Belastung die gesamten Arretierungskräfte. Aufgrund der Belastung stellt sich der Sperrstift innerhalb seiner Führung in der Sperreinheit geringfügig schräg, was zu einer Vergrößerung des Winkels, mit dem der Verjüngungsbereich in Anlage am Raststeg ist, führt. Bei wiederholter Belastung, beispielsweise beim Überfahren mehrerer Bodenwellen oder bei Druck auf eine Rückenlehne des Kraftfahrzeugsitzes kommt es dazu, dass der für die Arretierung verantwortliche Sperrstift aus der Rastöffnung, in die er eingegriffenen hat, mehr oder weniger herausgedrückt wird, also in z-Richtung hochgedrückt wird. Dies ist nachteilig. Ein Herausdrücken führt zwar nicht zu einer vollständigen Freigabe der Arretierung, da mindestens noch ein weiterer Sperrstift in Eingriff in einer Rastöffnung ist und andere Sperrstifte nachrasten können, er führt aber zu einer gewissen Verstellung des Fahrzeugsitzes in Längsrichtung. Der Effekt kann sich mehrfach wiederholen.

Es ist nachteilig, wenn ein Sperrstift aus der Arretierung heraus gedrückt wird. Die Kräfte, die den Sperrstift nach oben belasten, sollten möglichst klein sein. Es muss vermieden werden, dass der Sperrstift vom zugehörigen Raststeg freikommt.

Hier setzt nun die Erfindung ein. Sie hat es sich zur Aufgabe gemacht, die Arretiereinrichtung der eingangs genannten Art dahingehend weiterzubilden, dass die Gefahr eines selbsttätigen, ungehinderten Hochdrückens eines Sperrstiftes verringert wird und insbesondere vermieden wird, dass ein Sperrstift ungewollt aus einer Rastöffnung freikommen kann.

Diese Aufgabe wird gelöst durch eine Arretiereinrichtung mit den Merkmalen des Anspruchs 1.

Bei dieser Arretiereinrichtung verläuft der Verjüngungsbereich nicht mehr kegelförmig. Anstelle des geradlinigen Verlaufs nach dem Stand der Technik zwischen den Punkten A und B hat der Sperrstift nun einen Verjüngungsbereich, der durch die nicht geradlinig verlaufende Linie AB beschrieben ist. Diese Linie liegt niemals außerhalb der Strecke AB. Sie liegt zumindest über einen Teilbereich innerhalb dieser Strecke. Der Winkel, mit dem der Verjüngungsbereich an einem Raststeg anliegt, ist nun nicht mehr konstant. Er ist abhängig von der Position des Sperrstiftes relativ zum Raststeg. In Nähe des Punktes A ist der Winkel kleiner als im Stand der Technik. Je näher die Anlage entlang der Linie AB dem Punkt B kommt, umso größer wird der Winkel zwischen dem Verjüngungsbereich und dem Raststeg. Der Winkel erreicht in Nähe des Punktes B Werte, die größer sind als im gradlinigen Verlauf nach dem Stand der Technik.

Diese Lösung hat folgenden Vorteil: Je mehr ein Sperrstift aus einer Rastöffnung herausbewegt wird, umso geringer wird der Winkel, mit dem der Verjüngungsbereich am Raststeg anliegt. Umso geringer wird damit auch die Kraftkomponente, die den Sperrstift in z-Richtung aus der Rastöffnung herausdrücken kann. Insgesamt wird damit ein ungewolltes Freikommen des Raststiftes aus einer Rastöffnung deutlich besser verhindert, als dies im Stand der Technik der Fall ist.

Die Erfindung behält den Abstand zwischen den Punkten A und B, projiziert auf die Längsrichtung der Schienen, bei. Damit wird der für den Spielausgleich zur Verfügung stehende Bereich beibehalten.

In Nähe des Punktes A und insbesondere im unteren Drittel der Strecke AB soll der Winkel, mit dem der Verjüngungsbereich am Raststeg anliegt, mit Sicherheit unterhalb des Winkels der Selbsthemmung der verwendeten Materialien liegen. Beispielsweise liegt der Winkel unter 6°, vorzugsweise unter 5°. Bezogen auf den Winkel zwischen der Linie AB und der Stiftachse bedeutet dies einen noch etwas kleineren Winkel, beispielsweise unterhalb von 4,5°. Die Stiftachse stellt sich bei einer Belastung typischerweise in einen Winkel von etwa 0,5° zu den Rastöffnungen. Die Rastöffnungen liegen rechtwinklig zur Rastenleiste.

Die Linie AB kann aus mindestens zwei Teilstücken, vorzugsweise mehreren Teilstücken zusammengesetzt sein. Sie kann beispielsweise ein Polygonzug von zwei, drei oder mehreren geradlinigen Teilstücken sein. Sie kann auch aus nicht gradlinig verlaufenden Teilstücken stückweise zusammengesetzt sein. Auch Mischformen mit mindestens einem geradlinigen Teilstück und mindestens einem gekrümmt verlaufenden Teilstück sind möglich. Wenn die Linie AB aus Teilstücken zusammengesetzt ist, ist sie stetig, aber nicht stetig differenzierbar.

Vorteilhafterweise verläuft die Linie AB stetig differenzierbar zwischen den Punkten A und B. Sie ist in diesem Fall aus einer zusammenhängenden Kurve gebildet.

Vorzugsweise nimmt die Steigung der Linie AB ausgehend vom Punkt A kontinuierlich zum Punkt B hin ab. Die Linie AB verläuft monoton. Sie hat keinen Wendepunkt. Vorzugsweise wird die Linie AB durch ein Teil eines Kreisbogens, einer Ellipse, einer Parabel oder dergleichen gebildet.

Der Verjüngungsbereich sorgt dafür, dass die Arretierung spielfrei ist. Die Sperrstifte tauchen jeweils so tief in eine Rastöffnung ein, bis durch zwei Sperrstifte eine spielfreie Arretierung erreicht ist.

Ein Frontbereich ist im Wesentlichen durch das Herstellungsverfahren des Sperrstiftes im Wege einer Kaltverformung oder dergleichen bedingt und/oder notwendig. Als sehr vorteilhaft hat es sich erwiesen, dass der Frontbereich einen zylindrischen Anteil aufweist. Dieser ist beispielsweise 0,5 bis 2 mm in Richtung der Stiftachse gemessen lang. Durch den zylindrischen Anteil wird letztendlich ein vollständiges Freikommen des Sperrstiftes von einem Raststeg verhindert.

Vorzugsweise ist der Sperrstift zumindest im Verjüngungsbereich rotationssymmetrisch um die Stiftachse. Vorzugsweise ist er insgesamt rotationssymmetrisch.

Der Schaftbereich ist für die Beschreibung der Erfindung nicht beachtlich. Er kann nach dem Stand der Technik ausgeführt sein. Im Schaftbereich sind üblicherweise Mittel, wie z.B. ein Kragen, vorgesehen, um einen Angriffspunkt für eine Klappe zu haben. Vorzugsweise befindet sich im Schaftbereich auch ein Rillenbereich, hierzu wird auf die Offenbarung der DE 102 42 825 A1 verwiesen. Weitere Vorteile und Merkmale ergeben sich aus den sonstigen Ansprüchen sowie der folgenden Beschreibung von nicht einschränkend zu verstehenden Ausführungsbeispielen der Erfindung, die im Folgenden näher erläutert werden. In der Zeichnung zeigen:
- Fig. 1:: eine schnittbildliche Darstellung einer Arretiereinrichtung nach dem Stand der Technik, Schnittebene in der x-z-Ebene,
- Fig. 2:: eine Ansicht mit Blickrichtung wie in Figur 1 auf ein unteres Teilstücks eines Sperrstiftes nach dem Stand der Technik und ähnlich wie in Fig. 1, jedoch mit einem zylindrischen Anteil,
- Fig. 3:: eine Seitenansicht eines Sperrstiftes nach der Lehre des Patentanspruchs 1,
- Fig. 4:: eine Seitenansicht wie Fig. 3 für eine zweite Ausführung eines Sperrstiftes nach der Lehre des Anspruchs 1,
- Fig. 5:: eine Darstellung wie Fig. 3 eines dritten Ausführungsbeispiels des Sperrstiftes nach der Lehre des Anspruchs 1, und
- Fig. 6:: eine vergrößerte Darstellung des rechten Teils eines unteren Teilstücks eines Sperrstiftes zur Erläuterung der Konstruktion und zum Vergleich mit einem Sperrstift nach dem Stand der Technik.

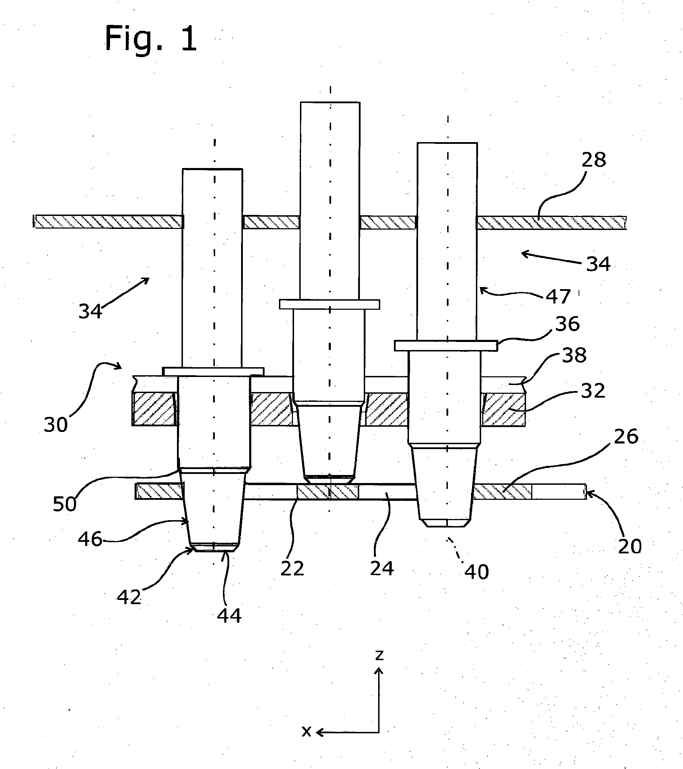

Die Arretiereinrichtung nach Figur 1 für eine Längsverstellung eines Kraftfahrzeugsitzes hat eine Bodenschiene 20, die eine Rastenleiste 22 ausbildet. Diese hat periodisch angeordnete Rastöffnungen 24, jeweils zwischen zwei Rastöffnungen 24 befindet sich ein Raststeg 26. Die Längsverstellvorrichtung hat weiterhin eine Sitzschiene 28, mit der eine Sperreinheit 30 verbunden ist. Die Sperreinheit 30 hat eine Stiftführung 32. Sie hat weiterhin drei Sperrstifte 34, die baugleich sind. Sie ragen durch Führungsbohrungen in der Stiftführung 32 hindurch. Die beiden äußeren Sperrstifte 34 sind in Anlage an jeweils einem ihnen benachbarten Raststeg 26 der Rastenleiste 22, die Anlage ist spielfrei. Der mittlere Sperrstift 34 ist inaktiv, er liegt auf einem Raststeg 26 auf. Jedem Sperrstift 34 ist eine (nicht dargestellte) Feder zugeordnet, die ihn in die gezeigte Position vorbelastet. Die Feder rückt ihren jeweiligen Sperrstift 34 nach unten. Die Sperrstifte 34 haben einen Kragen 36, der Kragen 36 bildet den Bereich größten Durchmessers des Sperrstiftes 34. Unterhalb der Kragen 36 der drei Sperrstifte 34 befindet sich eine Klappe 38. Sie dient dazu, alle drei Sperrstifte 34 der Sperreinheit 30 gemeinsam zu entriegeln.

Wie aus Figur 1 zu ersehen ist, liegt der linke Sperrstift 34 auf der Klappe 38 auf. Die Klappe 38 liegt auf der Stiftführung 32 auf. Ein weiteres Eintauchen in die Rastöffnung 24 ist dem linken Sperrstift 34 daher nicht möglich. Der linke Sperrstift 34 ist in seiner tiefsten Position.

Für die Beschreibung wird ein rechtshändiges rechtwinkliges Koordinatensystem mit den Achsen x, y und z verwendet. Die z-Achse verläuft parallel zu einer Stiftachse 40. Die x-Richtung verläuft in Längsrichtung der beiden Schienen 20, 28 und damit parallel zur Verschieberichtung der Längsverstellvorrichtung. Die y-Achse verläuft rechtwinklig zur Papierebene in Figur 1.

Die Sperrstifte 34 haben jeweils einen Frontbereich 42, der ein Frontende 44 hat. Nach oben hin schließt sich an den Frontbereich 42 ein Verjüngungsbereich 46 an. An diesen wiederum schließt sich nach oben ein Schaftbereich 47 an. Alle Figuren zeigen eine Seiten- bzw. Profilansicht des Sperrstiftes 34. Das Profil des Verjüngungsbereichs 46 hat einen oberen Punkt B und einen unteren Punkt A. Der Punkt B liegt bei einem Sperrstift 34 auf einer Kreislinie, ebenso der Punkt A. Diese Kreislinien sind konzentrisch und mittig zur Stiftachse 40.

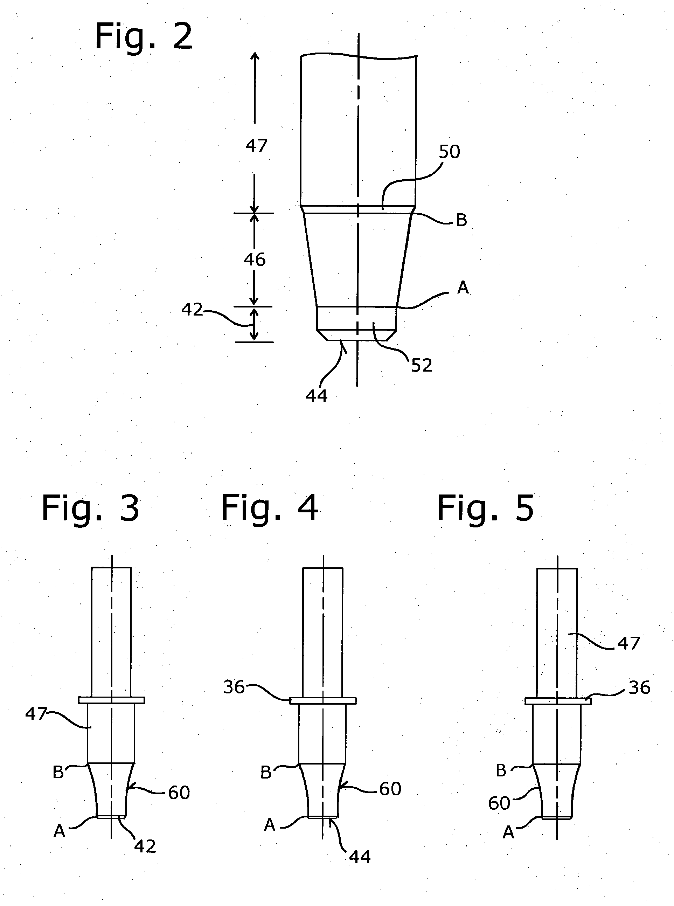

In der Ausführung nach Fig. 2 hat der Sperrstift 34 einen zylindrischen Anteil 52. Dieser ist Bestandteil des Frontbereichs 42. Der zylindrische Anteil 52 hat vorzugsweise eine axiale Länge von 10 bis 30%, vorzugsweise von etwa 25% der axialen Länge des Verjüngungsbereichs 46.

Bei dem Sperrstift 34 nach dem Stand der Technik sind die Punkte A und B durch eine Gerade 48 miteinander verbunden. Bei dem Sperrstift 34 mit den Merkmalen des Anspruchs 1 liegt die Begrenzung des Verjüngungsbereichs 46 nie außerhalb dieser Geraden 48, sondern zumindest teilweise innerhalb, vorzugsweise vollständig innerhalb. Die Punkte A und B durch eine Linie AB 60 miteinander verbunden. Das Profil der Sperrstifte 34 ist im Verjüngungsbereich 46 durch die Linie AB begrenzt. Die Ausführungsbeispiele nach den Figuren 3 bis 5 sind so konstruiert, dass die Linie AB 60 stets innerhalb der Geraden 48 liegt. Die Linie AB 60 kann als eine Erzeugende verstanden werden, bei einer Drehbewegung um die Stiftachse 40 wird die tatsächliche Mantelform des Verjüngungsbereichs 46 erzielt. Die Begriffe außerhalb und innerhalb werden dabei in Bezug auf die Lage zur Stiftachse 40 benutzt.

Die Linie AB 60 verläuft nicht geradlinig. Im Ausführungsbeispiel nach Figur 3 verläuft sie auf einem Kreisbogen. Der Mittelpunkt des Kreisbogens liegt auf einer Mittelsenkrechten zur Strecke AB. Im Ausführungsbeispiel nach Figur 4 ist die Linie AB 60 zusammengesetzt aus zwei Teilstücken, die jeweils durch Kreisbogenstücke gebildet sind. Dort, wo die beiden Teilstücke zusammenstoßen, ergibt sich eine stetige, aber nicht stetig differenzierbare Stelle. Im Ausführungsbeispiel nach Figur 5 wird die Linie AB durch ein Teilstück einer Ellipse begrenzt. Die Linien AB nach den Figuren 3 und 5 sind stetig differenzierbar.

Die Sperrstifte 34 nach Fig. 1 und 2, die nach dem Stand der Technik ausgeführt sind, haben einen Übergang 50, der sich oberhalb des Verjüngungsbereichs 46 befindet und Teil des Schaftbereichs 47 ist. Dieser Übergang 50 hat die Form eines axial recht kurzen Stumpfkegels. Der Übergang 50 ist produktionstechnisch bedingt. Es ist vorteilhaft, einen derartigen Übergang 50 zu vermeiden. Bei der erfindungsgemäßen Ausgestaltung der Sperrstifte 34, siehe Figuren 3 bis 5, ist ein derartiger Übergang 50 im Schaftbereich 47 nicht vorgesehen.

Es ist möglich, den Sperrstift 34 ohne Frontbereich 42, insbesondere mit einem nur sehr kurzen Frontbereich 42 auszubilden. Der Frontbereich 42 kann in axialer Richtung praktisch auf die Länge von mehr oder weniger Null schrumpfen. In jedem Fall gehört zum Frontbereich das Frontende 44.

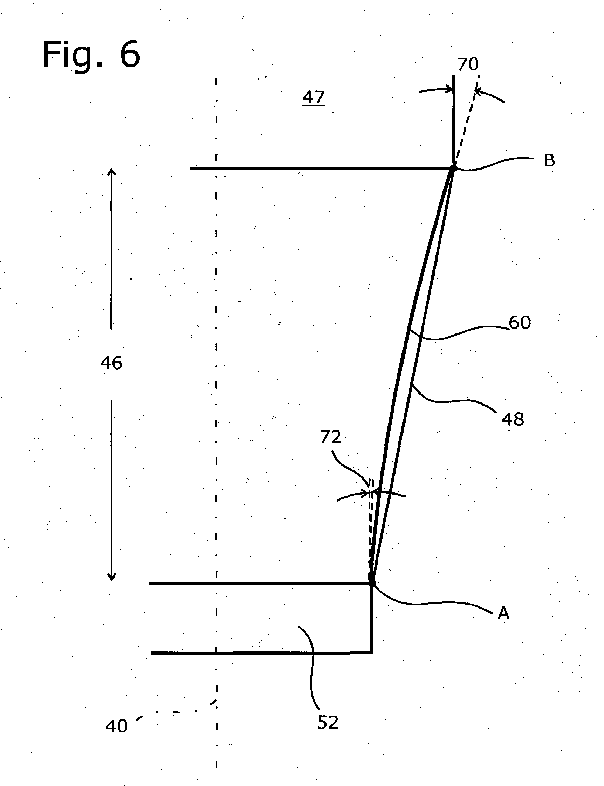

Die konstruktive Auslegung ist aus Figur 6 ersichtlich. Die Linie AB 60 schließt im Punkt A mit einer Parallelen zur Stiftachse 40 einen Winkel 72 ein. Dies ist die Steigung im Punkt A. Im Punkt B schließt eine Tangente an die Linie AB 60 mit einer Parallelen zur Stiftachse 40 einen Winkel 70 ein. Dies ist der Steigungswinkel am Punkt B.

## Patentansprüche

1. Arretiereinrichtung einer Längsverstellvorrichtung eines Kraftfahrzeugsitzes, mit a) einer Rastenleiste (22), die periodisch angeordnete Rastöffnungen (24) und Raststege (26) aufweist und einer Bodenschiene (20) der Längsverstellvorrichtung zugeordnet ist sowie b) einer Sperreinheit (30), die einer Sitzschiene (28) der Längsverstellvorrichtung zugeordnet ist und die mindestens zwei, unabhängig von einander in Rastöffnungen (24) einrastbare und gemeinsam ausrastbare Sperrstifte (34) aufweist, welche jeweils einen Frontbereich (42) mit einem Frontende (44), einen sich an das Frontende (44) anschließenden, mit den Raststegen (26) zusammenwirkenden Verjüngungsbereich (46) und einen sich an den Verjüngungsbereich (46) anschließenden Schaftbereich (47) mit einem oberen Ende aufweisen, wobei der Verjüngungsbereich (46) sich im Profil gesehen von einem oberen Punkt B zu einem unteren Punkt A verjüngt, und die eine Stiftachse (40) haben, **dadurch gekennzeichnet, dass** der Verjüngungsbereich (46) durch eine die Punkte A und B verbindende Linie (60) begrenzt ist, die keinen geradlinigen Verlauf hat, dass, gesehen von der Stiftachse (40), die Linie (60) nicht außerhalb einer Geraden (48) liegt, die die Punkte A und B verbindet, und dass, gesehen von der Stiftachse (40), die Linie (60) über mindestens ein Drittel der Strecke zwischen den Punkten A und B innerhalb der Geraden (48) liegt.

2. Arretiereinrichtung nach Anspruch 1, **dadurch gekennzeichnet, dass** die Linie (60) im Punkt A einen Verlauf hat, der mit der Stiftachse (40)einen Winkel unter 5°, vorzugsweise unter 4° einschließt.

3. Arretiereinrichtung nach einem der vorangegangenen Ansprüche, **dadurch gekennzeichnet, dass** die Linie (60) zumindest in ihrem oberen Drittel, ausgehend vom Punkt B, einen Verlauf hat, der mit der Stiftachse (40) einen Winkel grösser 7°, vorzugsweise kleiner 10° einschließt.

4. Arretiereinrichtung nach einem der vorangegangenen Ansprüche, **dadurch gekennzeichnet, dass** die Linie (60) mindestens ein gradliniges Teilstück und/oder mindestens ein gekrümmt verlaufendes Teilstück aufweist.

5. Arretiereinrichtung nach einem der vorangegangenen Ansprüche, **dadurch gekennzeichnet, dass** die Linie (60) zwischen den Punkten A und B stetig differenzierbar ist.

6. Arretiervorrichtung nach einem der vorangegangenen Ansprüche, **dadurch gekennzeichnet, dass** die Steigung der Linie (60) kontinuierlich, insbesondere monoton verläuft und ausgehend vom Punkt A abnimmt, insbesondere stetig abnimmt.

7. Arretiervorrichtung nach einem der vorangegangenen Ansprüche, **dadurch gekennzeichnet, dass** das Frontende (44) einen zylindrischen Ansatz (52) aufweist, der vorzugsweise 0,5 bis 2 mm lang ist.

## Claims

1. A locking device of a longitudinal adjustment device of a motor vehicle seat, comprising a) a latching strip (22) that comprises periodically disposed latching openings (24) and latching webs (26) and is allocated to a floor rail (20) of the longitudinal adjustment device, and b) a blocking unit (30) that is allocated to a seat rail (28) of the longitudinal adjustment device and comprises at least two blocking pins (34), which can be latched into latching openings (24) independently of one another and unlatched together, and which each have a front region (42) with a front end (44), a tapering region (46) following the front end (44) and cooperating with the latching webs (26), and a shaft region (47) that follows the tapering region (46) and has an upper end, wherein the tapering region (46), seen in profile, tapers from an upper point B to a lower point A, and which have a pin axis (40), **characterised in that** the tapering region (46) is delimited by a line (60), which connects the points A and B and which does not behave in a rectilinear manner, that, seen from the pin axis (40), the line (60) does not lie outside of a straight line (48) connecting the points A and B, and that, see from the pin axis (40), the line (60) lies within the straight line (48) over at least one third of the line segment between the points A and B.

2. The locking device according to claim 1, **characterised in that** the line (60) in point A behaves so as to include an angle of less than 5°, preferably of less than 4°, with the pin axis (40).

3. The locking device according to any one of the preceding claims, **characterised in that** the line (60), at least in its upper third, beginning at the point B, behaves so as to include an angle greater than 7°, preferably less than 10°, with the pin axis (40).

4. The locking device according to any one of the preceding claims, **characterised in that** the line (60) comprises at least one rectilinear section and/or at least one curved section.

5. The locking device according to any one of the preceding claims, **characterised in that** the line (60) is continuously differentiable between the points A and B.

6. The locking device according to any one of the preceding claims, **characterised in that** the gradient of the line (60) has a continuous, in particular monotonic, behaviour and decreases starting from the point A, in particular decreases continuously.

7. The locking device according to any one of the preceding claims, **characterised in that** the front end (44) has a cylindrical shoulder (52), which is preferably 0.5 to 2 mm long.

## Revendications

1. Dispositif d'arrêt d'un dispositif de réglage longitudinal d'un siège de véhicule automobile, comprenant a) une barre à crans (22) qui présente des orifices d'arrêt (24) et des entretoises d'arrêt (26) disposés périodiquement et qui est associée à un rail de fond (20) du dispositif de réglage longitudinal, ainsi que b) une unité de blocage (30) qui est associée à un rail de siège (28) du dispositif de réglage longitudinal et qui présente au moins deux goupilles de blocage (34) qui sont aptes à s'encliqueter indépendamment les unes des autres dans des orifices d'arrêt (24) et à se décliqueter en commun et qui présentent chacune une zone frontale (42) avec une extrémité frontale (44), une zone de rétrécissement (46) contiguë à ladite extrémité frontale (44) et agissant de concert avec les entretoises d'arrêt (26), et une zone de tige (47) contiguë à ladite zone de rétrécissement (46) et ayant une extrémité supérieure, ladite zone de rétrécissement (46) se rétrécissant, vue en profil, depuis un point supérieur B vers un point inférieur A, et qui ont un axe de goupille (40), **caractérisé par le fait que** ladite zone de rétrécissement (46) est délimitée par une ligne (60) qui relie les points A et B et qui ne présente pas une allure rectiligne, que, vue depuis ledit axe de goupille (40), la ligne (60) n'est pas située à l'extérieur d'une droite (48) qui relie les points A et B, et que, vue depuis ledit axe de goupille (40), la ligne (60) est située à l'intérieur de la droite (48) sur au moins un tiers du trajet entre les points A et B.

2. Dispositif d'arrêt selon la revendication 1, **caractérisé par le fait que**, sur le point A, ladite ligne (60) présente une allure qui forme avec ledit axe de goupille (40) un angle inférieur à 5°, de préférence inférieur à 4°.

3. Dispositif d'arrêt selon l'une quelconque des revendications précédentes, **caractérisé par le fait que** la ligne (60) présente au moins dans son tiers supérieur, à partir du point B, une allure qui forme avec ledit axe de goupille (40) un angle supérieur à 7°, de préférence inférieur à 10°.

4. Dispositif d'arrêt selon l'une quelconque des revendications précédentes, **caractérisé par le fait que** la ligne (60) présente au moins un tronçon rectiligne et/ou au moins un tronçon s'étendant de manière courbée.

5. Dispositif d'arrêt selon l'une quelconque des revendications précédentes, **caractérisé par le fait que** la ligne (60) peut être continument différentiée entre les points A et B.

6. Dispositif d'arrêt selon l'une quelconque des revendications précédentes, **caractérisé par le fait que** la pente de la ligne (60) s'étend de façon continue, en particulier monotone, et diminue, en particulier de façon continue, à partir du point A.

7. Dispositif d'arrêt selon l'une quelconque des revendications précédentes, **caractérisé par le fait que** ladite extrémité frontale (44) présente un embout cylindrique (52) qui présente une longueur comprise, de préférence, entre 0,5 et 2 mm.
